(19) Europäisches Patentamt
European Patent Office
Office européen des brevets

(11) **EP 4 636 695 A1**

(12) **EUROPEAN PATENT APPLICATION**

(43) Date of publication:
**22.10.2025 Bulletin 2025/43**

(21) Application number: **25160229.8**

(22) Date of filing: **26.02.2025**

(51) International Patent Classification (IPC):
*G06T 7/73* $^{(2017.01)}$

(52) Cooperative Patent Classification (CPC):
**G06T 7/73;** G06T 2207/30252

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.04.2024 JP 2024068538**

(71) Applicant: **TOYOTA JIDOSHA KABUSHIKI KAISHA**
**Toyota-shi, Aichi-ken, 471-8571 (JP)**

(72) Inventors:
• **KAWABATA, Masahiro**
**Tokyo, 103-0022 (JP)**
• **MURAKAMI, Ryota**
**Tokyo, 103-0022 (JP)**
• **NISHIMURA, Hiroki**
**Tokyo, 103-0022 (JP)**

(74) Representative: **D Young & Co LLP**
**3 Noble Street**
**London EC2V 7BQ (GB)**

(54) **HITCH ANGLE ESTIMATION DEVICE, HITCH ANGLE ESTIMATION METHOD, AND NON-TRANSITORY RECORDING MEDIUM**

(57)     A hitch angle estimation device performs a transformation from a view coordinate system to a world coordinate system on a point sequence indicating a tow bar on an image shot by a camera mounted on a vehicle towing a trailer via the tow bar and a point sequence indicating a lower end portion of the trailer on the image, performs a straight line fitting of the point sequence indicating the tow bar after the transformation and the point sequence indicating the lower end portion after the transformation, calculates a hitch angle of the trailer in the world coordinate system based on a straight line indicating the tow bar in the world coordinate system and a straight line indicating the lower end portion in the world coordinate system obtained by the straight line fitting, and performs a Kalman filter process on the hitch angle in the world coordinate system.

FIG. 1

**Description**

FIELD

The present disclosure relates to hitch angle estimation device, hitch angle estimation method, and non-transitory recording medium.

BACKGROUND

PTL 1 (JP-A-2023-178952) discloses a trailer angle estimation based on an image. In the technique disclosed in PTL 1, Kalman filter process is applied for each trailer angle measurement based on the three dimensional angle measurement. Further, in the technique disclosed in PTL 1, the path (track) of wheel and line detected in the image is correlated with the corresponding two dimensional trailer angle using the Kalman filter process.

PTL 1 does not disclose the technique for appropriately estimating the hitch angle of the trailer in the world coordinate system based on the image when the image shot by the camera mounted on the vehicle towing the trailer via the tow bar is blurred. Therefore, in the technique described in PTL 1, it is impossible to appropriately estimate the hitch angle of the trailer in the world coordinate system based on the image, for example, when the image shot by the camera mounted on the vehicle towing the trailer via the tow bar is blurred.

SUMMARY

In view of the above-described points, it is an object of the present disclosure to provide hitch angle estimation device, hitch angle estimation method, and non-transitory recording medium that can appropriately estimate a hitch angle of a trailer in a world coordinate system based on an image even when the image shot by a camera mounted on a vehicle which tows the trailer via a tow bar is blurred, or the like.

(1) One aspect of the present disclosure is a hitch angle estimation device including a processor configured to: perform a transformation from a view coordinate system to a world coordinate system on a point sequence indicating a tow bar on an image shot by a camera mounted on a vehicle which tows a trailer via the tow bar and a point sequence indicating a lower end portion of the trailer on the image; perform a straight line fitting of the point sequence indicating the tow bar after the transformation is performed and the straight line fitting of the point sequence indicating the lower end portion of the trailer after the transformation is performed; calculate a hitch angle of the trailer in the world coordinate system based on a straight line indicating the tow bar in the world coordinate system and a straight line indicating the lower end portion of the trailer in the world coordinate system obtained by the straight line fitting; and perform a Kalman filter process on the hitch angle of the trailer in the world coordinate system, wherein the processor is configured to output the hitch angle of the trailer in the world coordinate system after the Kalman filter process is performed, by using the hitch angle of the trailer in the world coordinate system as an observation function and using a kinematic model indicating the vehicle, the trailer and the tow bar obtained by performing the transformation from the view coordinate system to the world coordinate system on the image as a state transition function.

(2) In the hitch angle estimation device of the aspect (1), a Kalman filter used for the Kalman filter process may be an unscented Kalman filter.

(3) In the hitch angle estimation device of the aspect (1) or (2), the kinematic model indicating the vehicle, the trailer and the tow bar may include the hitch angle of the trailer in the world coordinate system, a steering angle of the vehicle in the world coordinate system, a speed of the vehicle in the world coordinate system, a wheel base of the vehicle in the world coordinate system, a hitch length of the vehicle in the world coordinate system, and a trailer beam length in the world coordinate system.

(4) Another aspect of the present disclosure is a hitch angle estimation method including: performing a transformation from a view coordinate system to a world coordinate system on a point sequence indicating a tow bar on an image shot by a camera mounted on a vehicle which tows a trailer via the tow bar and a point sequence indicating a lower end portion of the trailer on the image; performing a straight line fitting of the point sequence indicating the tow bar after the transformation is performed and the straight line fitting of the point sequence indicating the lower end portion of the trailer after the transformation is performed; calculating a hitch angle of the trailer in the world coordinate system based on a straight line indicating the tow bar in the world coordinate system and a straight line indicating the lower end portion of the trailer in the world coordinate system obtained by the straight line fitting; and performing a Kalman filter process on the hitch angle of the trailer in the world coordinate system, wherein the hitch angle of the trailer in the world coordinate system after the Kalman filter process is performed is output by using the hitch angle of the trailer in the world coordinate system as an observation function and using a kinematic model indicating the vehicle, the trailer and the tow bar obtained by performing the transformation from the view coordinate system to the world coordinate system on the image as a state transition function.

(5) Another aspect of the present disclosure is a non-transitory recording medium having recorded thereon a computer program for causing a processor to perform a process including: performing a transformation from a view coordinate system to a world coordinate system on a point sequence indicating a tow bar on an image shot by a camera mounted on a vehicle which tows a trailer via the tow bar and a point sequence indicating a lower end portion of the trailer on the image; performing a straight line fitting of the point sequence indicating the tow bar after the transformation is performed and the straight line fitting of the point sequence indicating the lower end portion of the trailer after the transformation is performed; calculating a hitch angle of the trailer in the world coordinate system based on a straight line indicating the tow bar in the world coordinate system and a straight line indicating the lower end portion of the trailer in the world coordinate system obtained by the straight line fitting; and performing a Kalman filter process on the hitch angle of the trailer in the world coordinate system, wherein the hitch angle of the trailer in the world coordinate system after the Kalman filter process is performed is output by using the hitch angle of the trailer in the world coordinate system as an observation function and using a kinematic model indicating the vehicle, the trailer and the tow bar obtained by performing the transformation from the view coordinate system to the world coordinate system on the image as a state transition function.

According to the present disclosure, it is possible to appropriately estimate a hitch angle of a trailer in a world coordinate system based on an image even when the image shot by a camera mounted on a vehicle which tows the trailer via a tow bar is blurred, or the like.

BRIEF DESCRIPTION OF DRAWINGS

FIG. 1 is a view showing an example of a vehicle to which a hitch angle estimation device of a first embodiment is applied.
FIG. 2A is a side view of the vehicle 1, trailer TR and tow bar DB.
FIG. 2B is a view of the vehicle 1, the trailer TR and the tow bar DB from below (the lower side of the FIG. 2A).
FIG. 3A is a view showing an example of an image IM including the trailer TR and the tow bar DB shot by a camera 11.
FIG. 3B is a view showing an example of point sequence PTR1 indicating a lower end portion TR1 of the trailer TR and point sequence PDB indicating the tow bar DB extracted by an extraction unit 3C from the image IM shown in FIG. 3A.
FIG. 3C is a view showing an example of straight line LTR1 indicating the lower end portion TR1 of the trailer TR in the world coordinate system and straight line LDB indicating the tow bar DB in the world coordinate system obtained by a transformation unit 3B performing a transformation from a view coordinate system to the world coordinate system and by a straight line fitting unit 3E performing a straight line fitting of the point sequence PTR1 and the point sequence PDB shown in FIG. 3B.
FIG. 4 is a view showing an example of a hitch angle of the trailer in the world coordinate system calculated by a calculation unit.
FIG. 5 is a view showing an example of a kinematic model indicating the vehicle, the trailer and the tow bar.
FIG. 6 is a flowchart for explaining an example of a process performed by the hitch angle estimation device of the first embodiment.

DESCRIPTION OF EMBODIMENTS

Below, referring to the drawings, embodiments of hitch angle estimation device, hitch angle estimation method, and non-transitory recording medium of the present disclosure will be explained.

<First Embodiment>

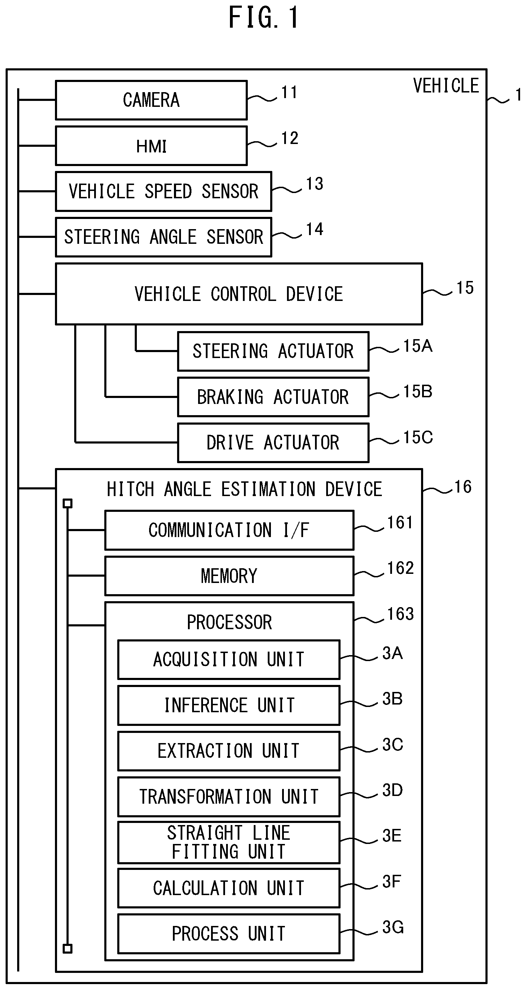

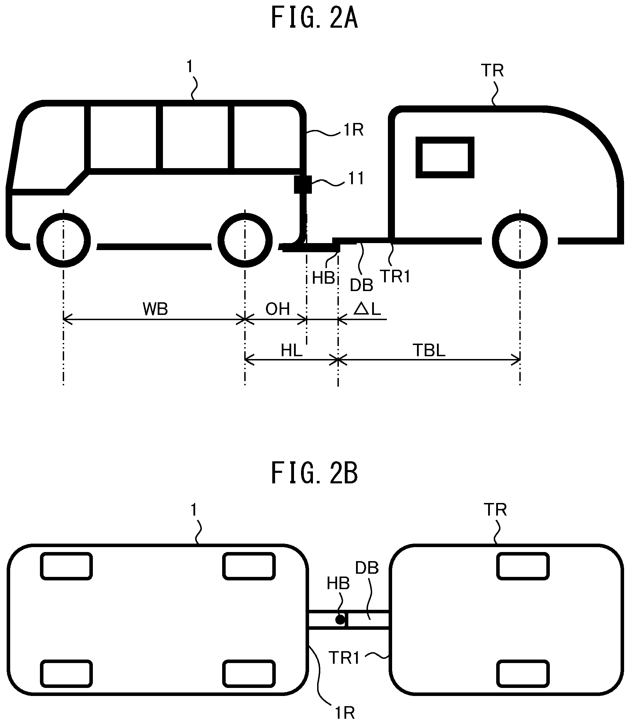

FIG. 1 is a view showing an example of a vehicle 1 to which a hitch angle estimation device 16 of a first embodiment is applied. FIG. 2A and FIG. 2B are views showing an example of a relation between the vehicle 1, trailer TR and tow bar DB shown in FIG. 1. Specifically, FIG. 2A is a side view of the vehicle 1, the trailer TR and the tow bar DB. FIG. 2B is a view of the vehicle 1, the trailer TR and the tow bar DB from below (the lower side of the FIG. 2A).

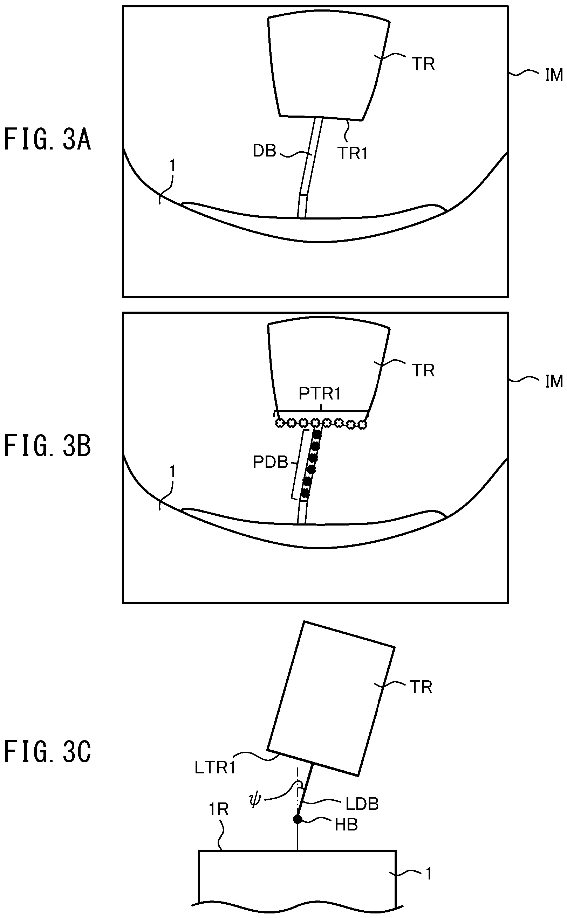

In the example shown in FIG. 1, FIG. 2A and FIG. 2B, the vehicle 1 tows the trailer TR via the tow bar DB. The vehicle 1 includes camera 11, HMI (Human Machine Interface) 12, vehicle speed sensor 13, steering angle sensor 14, vehicle control device 15, steering actuator 15A, braking actuator 15B, drive actuator 15C, and the hitch angle estimation device 16. The camera 11 is disposed, for example, on a rear end portion 1R of the vehicle 1. The camera 11 shoots the rear (right side of the FIG. 2A) of the vehicle 1 and transmits an image (e.g., fisheye lens image, etc.) IM (see FIG. 3A) including the trailer TR and the tow bar DB to the hitch angle estimation device 16.

As shown in FIG. 2A and FIG. 2B, the tow bar DB is fixed to the trailer TR, is connected to the vehicle 1, and can rotate about a hitch ball HB.

FIG. 3A to FIG. 3C are views showing an example of an image IM including the trailer TR and the tow bar DB shot by a camera 11, and the like. Specifically, FIG. 3A is a view showing the example of an image IM including the trailer TR and the tow bar DB shot by the camera 11. FIG. 3B is a view showing an example of point sequence PTR1 indicating a lower end portion TR1 of the trailer TR and point sequence PDB indicating the tow bar DB extracted by an extraction unit 3C from the image IM shown in FIG. 3A. FIG. 3C is a view showing an example of straight line LTR1 indicating the lower end portion TR1 of the trailer TR in the world coordinate system and straight line LDB indicating the tow bar DB in the world coordinate system obtained by a transformation unit 3B performing a transformation from a view coordinate system to the world coordinate system and by a straight line fitting unit 3E performing a straight line fitting of the point sequence PTR1 and the point sequence PDB shown in FIG. 3B.

In the example shown in FIG. 1, FIG. 2 and FIG. 3A to FIG. 3C, the HMI 12 has a function of receiving various operations of the driver of the vehicle 1, and transmits a signal indicating the operation of the driver of the vehicle 1 to the vehicle control device 15. The vehicle speed sensor 13 detects the speed (vehicle speed) V [m/s] of the vehicle 1 and transmits the detection result to the vehicle control device 15 and the hitch angle estimation device 16. The steering angle sensor 14 detects the steering angle $\Phi$ [deg] and transmits the detection result to the vehicle control device 15 and the hitch angle estimation device 16. The vehicle control device 15 controls the steering actuator 15A, the braking actuator 15B, and the drive actuator 15C based on the signal and the like transmitted from the HMI 12.

The hitch angle estimation device 16 is configured by a microcomputer including communication interface (I/F) 161, memory 162, and processor 163. The communication interface 161 includes an interface circuit for connecting the hitch angle estimation device 16 to the camera 11, the HMI 12, the vehicle speed sensor 13, the steering angle sensor 14, and the vehicle control device 15. The memory 162 stores a program used in a process performed by the processor 163 and various data. Specifically, the memory 162 stores, for example, wheel base WB (see FIG. 2A) of the vehicle 1, rear overhang OH (see FIG. 2A) of the vehicle 1, etc. The wheel base WB of the vehicle 1, the rear overhang OH and the like of the vehicle 1 is written in the memory 162, for example, at the time of manufacturing of the vehicle 1. The memory 162 stores a trailer beam length TBL (length from the hitch ball HB to the wheels of the trailer TR) (see FIG. 2A). The trailer beam length TBL is calculated based on, for example, the behavior of the trailer TR during the calibration travel of the trailer TR, and is written to the memory 162 after the calibration travel of the trailer TR. The processor 163 has function as an acquisition unit 3A, function as an inference unit 3B, function as an extraction unit 3C, function as a transformation unit 3D, function as a straight line fitting unit 3E, function as a calculation unit 3F, and function as a process unit 3G.

The acquisition unit 3A acquires the image IM including the trailer TR and the tow bar DB shot by the camera 11. The acquisition unit 3A acquires the vehicle speed V detected by the vehicle speed sensor 13 and the steering angle $\Phi$ detected by the steering angle sensor 14.

The inference unit 3B infers the lower end portion TR1 of the trailer TR and the tow bar DB on the image IM based on the image IM acquired by the acquisition unit 3A, as shown in FIG. 3A. Specifically, the inference unit 3B infers the lower end portion TR1 of the trailer TR and the tow bar DB on the image IM based on the image IM acquired by the acquisition unit 3A by using a model obtained by performing learning using teacher data which is a data set of a learning image shot by a learning camera (not shown) mounted on a learning vehicle (not shown) which tows a learning trailer (not shown) via a learning tow bar (not shown), and a label indicating the lower end portion of the learning trailer and the learning tow bar on the learning image.

The extraction unit 3C extracts point sequence PTR1 indicating the lower end portion TR1 of the trailer TR on the image IM and point sequence PDB indicating the tow bar DB on the image IM based on the lower end portion TR1 of the trailer TR and the tow bar DB on the image IM inferred by the inference unit 3B, as shown in FIG. 3A and FIG. 3B.

The transformation unit 3D performs a transformation from a view coordinate system to a world coordinate system on the image IM shown in FIG. 3B, for example, by using a known technique called coordinate transformation or the like. That is, the transformation unit 3D performs the transformation from the view coordinate system to the world coordinate system on the point sequence PTR1 indicating the lower end portion TR1 of the trailer TR and the point sequence PDB indicating the tow bar DB on the image IM shown in FIG. 3B.

The straight line fitting unit 3E performs a straight line fitting of the point sequence PTR1 indicating the lower end portion TR1 of the trailer TR after the transformation is performed by the transformation unit 3D, and generates a straight line LTR1 indicating the lower end portion TR1 of the trailer TR in the world coordinate system as shown in FIG. 3C. In addition, the straight line fitting unit 3E performs the straight line fitting of the point sequence PDB indicating the tow bar DB after the transformation is performed by the transformation section 3D, and generates a straight line LDB indicating the tow bar DB in the world coordinate system as shown in FIG. 3C.

The calculation unit 3F calculates a hitch angle $\psi$ [deg] of the trailer TR in the world coordinate system based on the straight line LTR1 indicating the lower end portion TR1 of the trailer TR in the world coordinate system, the straight line LDB indicating the tow bar DB in the world coordinate system, and the like obtained by the straight line fitting shown in FIG.

3C.

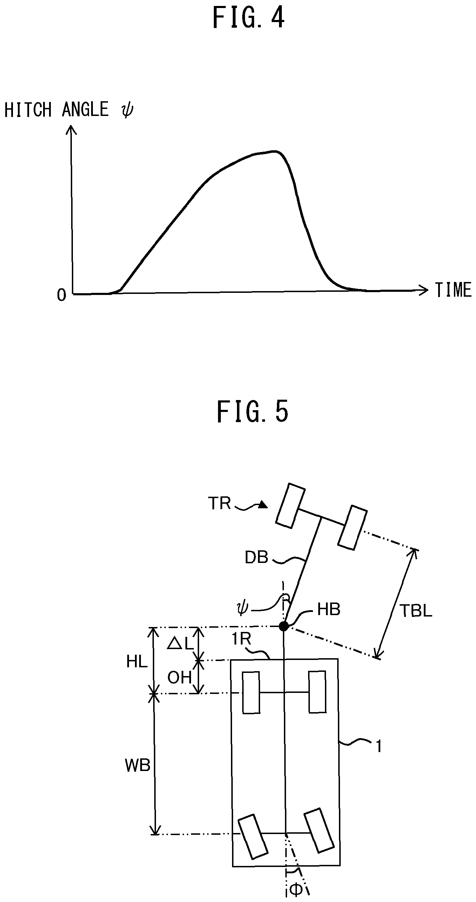

FIG. 4 is a view showing an example of the hitch angle ψ [deg] of the trailer TR in the world coordinate system calculated by the calculation unit 3F. The vertical axis of FIG. 4 shows the hitch angle ψ of the trailer TR in the world coordinate system, and the horizontal axis of FIG. 4 shows time.

In FIG. 4, the time period when the hitch angle ψ of the trailer TR in the world coordinate system is zero corresponds to the time period when the steering angle Φ of the vehicle 1 is zero (the time period when the vehicle 1 is proceeding straight). The time period when the hitch angle ψ of the trailer TR in the world coordinate system is greater than zero corresponds to the time period when the steering angle Φ of the vehicle 1 is greater than zero (the time period when the vehicle 1 is turning).

In the example shown in FIG. 1 to FIG. 4, the process unit 3G performs a Kalman filter process on the hitch angle ψ of the trailer TR in the world coordinate system calculated by the calculation unit 3F. The process unit 3G performs the Kalman filter process by using an unscented Kalman filter (UKF).

Specifically, the process unit 3G uses the hitch angle ψ (see FIG. 4) of the trailer TR in the world coordinate system calculated by the calculation unit 3F as an observation function in the Kalman filter process. In addition, the process unit 3G uses a kinematic model (see FIG. 5) indicating the vehicle 1, the trailer TR, and the tow bar DB obtained by performing the transformation from the view coordinate system to the world coordinate system on the image IM, as a state transition function in the Kalman filter process.

FIG. 5 is a view showing an example of the kinematic model indicating the vehicle 1, the trailer TR and the tow bar DB.

In the example shown in FIG. 1 to FIG. 5, the kinematic model indicating the vehicle 1, the trailer TR and the tow bar DB includes the steering angle Φ(see FIG. 5) of the vehicle 1 in the world coordinate system. The steering angle Φ detected by the steering angle sensor 14 is used as the steering angle Φ of the vehicle 1 in the world coordinate system.

Also, the kinematic model indicating the vehicle 1, the trailer TR and the tow bar DB includes the velocity V of the vehicle 1 in the world coordinate system. The speed V of the vehicle 1 detected by the vehicle speed sensor 13 is used as the speed V of the vehicle 1 in the world coordinate system.

Further, the kinematic model indicating the vehicle 1, the trailer TR and the tow bar DB includes the wheel base WB (see FIG. 5) of the vehicle 1 in the world coordinate system. The wheel base WB (see FIG. 2A) of the vehicle 1 written in the memory 162 is used as the wheel base WB of the vehicle 1 in the world coordinate system.

The kinematic model indicating the vehicle 1, the trailer TR and the tow bar DB includes a hitch length HL (see FIG. 5) of vehicle 1 in the world coordinate system. As shown in FIG. 5, the hitch length HL of the vehicle 1 in the world coordinate system is the sum of rear overhang OH of the vehicle 1 in the world coordinate system and the length ΔL from a rear end portion 1R of the vehicle 1 to the hitch ball HB in the world coordinate system. The rear overhang OH (see FIG. 2A) of the vehicle 1 written in the memory 162 is used as the rear overhang OH of the vehicle 1 in the world coordinate system. The length ΔL (see FIG. 2A) calculated based on the image IM (see FIG. 3A) including the trailer TR and the tow bar DB shot by the camera 11 is used as the length ΔL from the rear end portion 1R of the vehicle 1 to the hitch ball HB in the world coordinate system.

Also, the kinematic model indicating the vehicle 1, the trailer TR and the tow bar DB includes the trailer beam length TBL (see FIG. 5) in the world coordinate system. The trailer beam length TBL (see FIG. 2A) calculated based on the behavior of the trailer TR during the calibration travel of the trailer TR and written in the memory 162 as described above is used as the trailer beam length TBL in the world coordinate system.

In addition, the kinematic model indicating the vehicle 1, the trailer TR and the tow bar DB includes the hitch angle ψ (see FIG. 5) of the trailer TR in the world coordinate system. The hitch angle ψ satisfying the following equation is used as the hitch angle ψ of the trailer TR in the world coordinate system included in the kinematic model indicating the vehicle 1, the trailer TR and the tow bar DB.

$$\psi = -(V/WB)(\tan\Phi + (WB/TBL)\times\sin\psi + (HL/TBL)\times\tan\Phi\times\cos\psi)$$

The hitch angle ψ of the trailer TR in the world coordinate system in the above equation changes according to the change of the steering angle Φ of the vehicle 1 in the world coordinate system, similar to the hitch angle ψ of the trailer TR in the world coordinate system shown in FIG. 4 (that is, the hitch angle ψ of the trailer TR in the world coordinate system calculated by the calculation unit 3F).

In the example shown in FIG. 1 to FIG. 5, the process unit 3G outputs the hitch angle ψ of the trailer TR in the world coordinate system after the Kalman filter process described above is performed.

In other words, in the example shown in FIG. 1 to FIG. 5, the process unit 3G estimates the hitch angle ψ of the trailer TR in the world coordinate system by appropriately combining the observation function and the state transition function (specifically, reflecting the hitch angle ψ of the trailer TR in the world coordinate system which is previously calculated).

Therefore, in the example shown in FIG. 1 to FIG. 5, the hitch angle ψ of the trailer TR in the world coordinate system can be appropriately estimated based on the image IM even when the image IM shot by the camera 11 mounted on the vehicle 1 which tows the trailer TR via the tow bar DB is unclear.

Specifically, in the example shown in FIG. 1 to FIG. 5, the hitch angle ψ of the trailer TR in the world coordinate system of this time is estimated by considering the hitch angle ψ of the trailer TR in the world coordinate system and the like included in the kinematic model when the hitch angle ψ of the trailer TR in the world coordinate system is previously estimated, instead of estimating the hitch angle ψ of the trailer TR in the world coordinate system based on only the blurred image IM when the image IM shot by the camera 11 mounted on the vehicle 1 towing the trailer TR via the tow bar DB is unclear. Therefore, it is possible to suppress the possibility that the hitch angle ψ of the trailer TR in the world coordinate system is inappropriately estimated based on the blurred image IM.

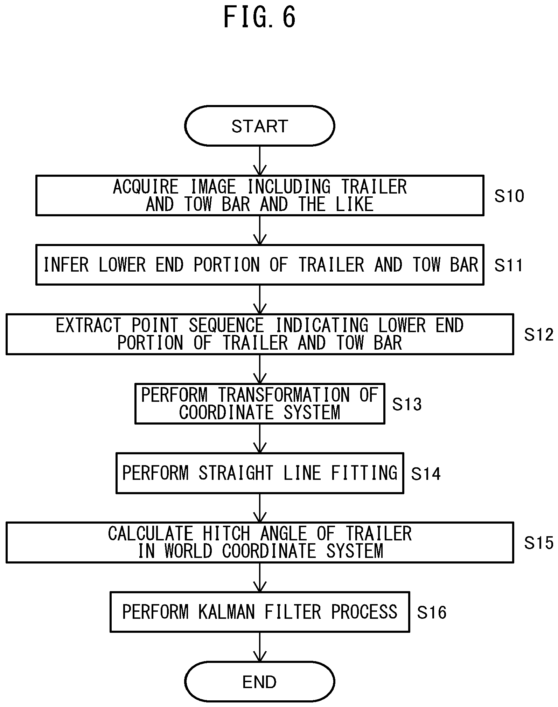

FIG. 6 is a flowchart for explaining an example of the process performed by the hitch angle estimation device of the first embodiment.

In the example shown in FIG. 6, at step S10, the acquisition unit 3A acquires the image IM including the trailer TR and the tow bar DB shot by the camera-11. The acquisition unit 3A acquires the vehicle speed V detected by the vehicle speed sensor 13 and the steering angle Φ detected by the steering angle sensor 14. Furthermore, the acquisition unit 3A acquires the wheel base WB of the vehicle 1, the rear overhang OH of the vehicle 1, the trailer beam length TBL, and the like that are written in the memory 162.

At step S11, the inference unit 3B infers the lower end portion TR1 of the trailer TR and the tow bar DB on the image IM based on the image IM acquired at step S10.

At step S12, the extraction unit 3C extracts the point sequence PTR1 indicating the lower end portion TR1 of the trailer TR on the image IM and the point sequence PDB indicating the tow bar DB on the image IM based on the lower end portion TR1 of the trailer TR and the tow bar DB on the image IM inferred at step S11.

At step S13, the transformation unit 3D performs the transformation from the view coordinate system to the world coordinate system on the point sequence PTR1 indicating the lower end portion TR1 of the trailer TR and the point sequence PDB indicating the tow bar DB on the image IM.

At step S14, the straight line fitting unit 3E performs the straight line fitting of the point sequence PTR1 indicating the lower end portion TR1 of the trailer TR after step S13 is performed, and generates the straight line LTR1 indicating the lower end portion TR1 of the trailer TR in the world coordinate system. In addition, the straight line fitting unit 3E performs the straight line fitting of the point sequence PDB indicating the tow bar DB after step S13 is performed, and generates the straight line LDB indicating the tow bar DB in the world coordinate system.

At step S15, the calculation unit 3F calculates the hitch angle ψ [deg] of the trailer TR in the world coordinate system based on the straight line LTR1 indicating the lower end portion TR1 of the trailer TR in the world coordinate system, the straight line LDB indicating of the tow bar DB in the world coordinate system, and the like obtained by the straight line fitting performed at step S14.

At step S16, the process unit 3G performs the Kalman filter process on the hitch angle ψ of the trailer TR in the world coordinate system calculated at step S15.

<Second Embodiment>

The vehicle 1 to which the hitch angle estimation device 16 of a second embodiment is applied is configured similarly to the vehicle 1 to which the hitch angle estimation device 16 of the first embodiment described above is applied, except for the points to be described later.

In the vehicle 1 to which the hitch angle estimation device 16 of the first embodiment is applied as described above, the transformation unit 3D performs the transformation from the view coordinate system to the world coordinate system on the image IM shown in FIG. 3B by using the known technique.

On the other hand, in the vehicle 1 to which the hitch angle estimation device 16 of the second embodiment is applied, the transformation unit 3D performs the transformation from the view coordinate system to the world coordinate system on the image IM shown in FIG. 3B by using a technique (for example, inherent technique in the manufacturer of the vehicle 1, etc.) other than the known technique.

As described above, although the embodiments of the hitch angle estimation device, the hitch angle estimation method, and the non-transitory recording medium of the present disclosure have been described with reference to the drawings, the hitch angle estimation device, the hitch angle estimation method, and the non-transitory recording medium of the present disclosure are not limited to the embodiments described above, and may be appropriately changed without departing from the scope of the present disclosure. The configuration of each example of the embodiment described above may be appropriately combined. In each example of the above-described embodiment, the process performed in the hitch angle estimation device 16 has been described as software process performed by executing the program, but the process performed in the hitch angle estimation device 16 may be process performed by hardware. Alternatively, the process performed by the hitch angle estimation device 16 may be a combination of both software and hardware. Further, the program (program for realizing the function of the processor 163 of the hitch angle estimation device 16) stored in the memory 162 of the hitch angle estimation device 16 may be recorded in a computer-readable storage medium (non-transitory recording medium) such as, semiconductor memory, magnetic recording medium, optical recording medium, or the like for providing, distribution or the like.

**Claims**

1. A hitch angle estimation device (16) comprising a processor (163) configured to:

    perform a transformation from a view coordinate system to a world coordinate system on point sequence (PDB) indicating a tow bar (DB) on an image (IM) shot by a camera (11) mounted on a vehicle (1) which tows a trailer (TR) via the tow bar (DB) and point sequence (PTR1) indicating a lower end portion (TR1) of the trailer (TR) on the image (IM);
    perform a straight line fitting of the point sequence (PDB) indicating the tow bar (DB) after the transformation is performed and the straight line fitting of the point sequence (PTR1) indicating the lower end portion (TR1) of the trailer (TR) after the transformation is performed;
    calculate a hitch angle of the trailer (TR) in the world coordinate system based on a straight line (LDB) indicating the tow bar (DB) in the world coordinate system and a straight line (LTR1) indicating the lower end portion (TR1) of the trailer (TR) in the world coordinate system obtained by the straight line fitting; and
    perform a Kalman filter process on the hitch angle of the trailer (TR) in the world coordinate system,
    wherein the processor (163) is configured to output the hitch angle of the trailer (TR) in the world coordinate system after the Kalman filter process is performed, by using the hitch angle of the trailer (TR) in the world coordinate system as an observation function and using a kinematic model indicating the vehicle (1), the trailer (TR) and the tow bar (DB) obtained by performing the transformation from the view coordinate system to the world coordinate system on the image (IM) as a state transition function.

2. The hitch angle estimation device (16) according to claim 1, wherein a Kalman filter used for the Kalman filter process is an unscented Kalman filter.

3. The hitch angle estimation device (16) according to claim 1, wherein the kinematic model indicating the vehicle (1), the trailer (TR) and the tow bar (DB) includes the hitch angle of the trailer (TR) in the world coordinate system, a steering angle of the vehicle (1) in the world coordinate system, a speed of the vehicle (1) in the world coordinate system, a wheel base of the vehicle (1) in the world coordinate system, a hitch length of the vehicle (1) in the world coordinate system, and a trailer beam length in the world coordinate system.

4. A hitch angle estimation method comprising:

    performing a transformation from a view coordinate system to a world coordinate system on point sequence (PDB) indicating a tow bar (DB) on an image (IM) shot by a camera (11) mounted on a vehicle (1) which tows a trailer (TR) via the tow bar (DB) and point sequence (PTR1) indicating a lower end portion (TR1) of the trailer (TR) on the image (IM);
    performing a straight line fitting of the point sequence (PDB) indicating the tow bar (DB) after the transformation is performed and the straight line fitting of the point sequence (PTR1) indicating the lower end portion (TR1) of the trailer (TR) after the transformation is performed;
    calculating a hitch angle of the trailer (TR) in the world coordinate system based on a straight line (LDB) indicating the tow bar (DB) in the world coordinate system and a straight line (LTR1) indicating the lower end portion (TR1) of the trailer (TR) in the world coordinate system obtained by the straight line fitting; and
    performing a Kalman filter process on the hitch angle of the trailer in the world coordinate system,
    wherein the hitch angle of the trailer (TR) in the world coordinate system after the Kalman filter process is performed is output by using the hitch angle of the trailer (TR) in the world coordinate system as an observation function and using a kinematic model indicating the vehicle (1), the trailer (TR) and the tow bar (DB) obtained by performing the transformation from the view coordinate system to the world coordinate system on the image (IM) as a state transition function.

5. A non-transitory recording medium having recorded thereon a computer program for causing a processor (163) to perform a process comprising:

performing a transformation from a view coordinate system to a world coordinate system on point sequence (PDB) indicating a tow bar (DB) on an image (IM) shot by a camera (11) mounted on a vehicle (1) which tows a trailer (TR) via the tow bar (DB) and point sequence (PTR1) indicating a lower end portion (TR1) of the trailer (TR) on the image (IM);

performing a straight line fitting of the point sequence (PDB) indicating the tow bar (DB) after the transformation is performed and the straight line fitting of the point sequence (PTR1) indicating the lower end portion (TR1) of the trailer (TR) after the transformation is performed;

calculating a hitch angle of the trailer (TR) in the world coordinate system based on a straight line (PDB) indicating the tow bar (DB) in the world coordinate system and a straight line (PTR1) indicating the lower end portion (TR1) of the trailer (TR) in the world coordinate system obtained by the straight line fitting; and

performing a Kalman filter process on the hitch angle of the trailer in the world coordinate system,

wherein the hitch angle of the trailer (TR) in the world coordinate system after the Kalman filter process is performed is output by using the hitch angle of the trailer (TR) in the world coordinate system as an observation function and using a kinematic model indicating the vehicle (1), the trailer (TR) and the tow bar (DB) obtained by performing the transformation from the view coordinate system to the world coordinate system on the image (IM) as a state transition function.

# FIG. 1

VEHICLE ~1

- CAMERA ~11
- HMI ~12
- VEHICLE SPEED SENSOR ~13
- STEERING ANGLE SENSOR ~14
- VEHICLE CONTROL DEVICE ~15
  - STEERING ACTUATOR ~15A
  - BRAKING ACTUATOR ~15B
  - DRIVE ACTUATOR ~15C
- HITCH ANGLE ESTIMATION DEVICE ~16
  - COMMUNICATION I/F ~161
  - MEMORY ~162
  - PROCESSOR ~163
    - ACQUISITION UNIT ~3A
    - INFERENCE UNIT ~3B
    - EXTRACTION UNIT ~3C
    - TRANSFORMATION UNIT ~3D
    - STRAIGHT LINE FITTING UNIT ~3E
    - CALCULATION UNIT ~3F
    - PROCESS UNIT ~3G

# FIG. 2A

# FIG. 2B

FIG. 3A

TR

IM

DB

TR1

1

FIG. 3B

TR

IM

PTR1

PDB

1

FIG. 3C

TR

LTR1

$\psi$

LDB

HB

1R

1

# FIG. 4

HITCH ANGLE $\psi$

# FIG. 5

# FIG. 6

START

ACQUIRE IMAGE INCLUDING TRAILER
AND TOW BAR AND THE LIKE — S10

INFER LOWER END PORTION OF TRAILER AND TOW BAR — S11

EXTRACT POINT SEQUENCE INDICATING LOWER END
PORTION OF TRAILER AND TOW BAR — S12

PERFORM TRANSFORMATION OF
COORDINATE SYSTEM — S13

PERFORM STRAIGHT LINE FITTING — S14

CALCULATE HITCH ANGLE OF TRAILER
IN WORLD COORDINATE SYSTEM — S15

PERFORM KALMAN FILTER PROCESS — S16

END

Europäisches
Patentamt
European
Patent Office
Office européen
des brevets

# EUROPEAN SEARCH REPORT

**Application Number**

EP 25 16 0229

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BAHRAMGIRI MOJTABA ET AL: "Hitch Angle Estimation for Trailer Backup System-An Object Detection and Tracking Approach", IEEE TRANSACTIONS ON INSTRUMENTATION AND MEASUREMENT, vol. 71, 1 January 2022 (2022-01-01), pages 1-15, XP093280288, USA ISSN: 0018-9456, DOI: 10.1109/TIM.2022.3212737 * abstract * * figure 2, lower branch "Deep learning based TAD" * * column 9, penultimate paragraph * | 1-5 | INV. G06T7/73 |
| A | WO 2018/153915 A1 (CONNAUGHT ELECTRONICS LTD [IE]) 30 August 2018 (2018-08-30) * page 5, paragraph 2-3 * * page 10, last paragraph - page 11, paragraph 2; figure 9 * | 1-5 | |
| A | US 2018/127024 A1 (POURREZAEI KHALIGH SEPEHR [CA] ET AL) 10 May 2018 (2018-05-10) * paragraphs [0032], [0033], [0039] - [0041]; figure 3 * | 1-5 | TECHNICAL FIELDS SEARCHED (IPC) G06T |

The present search report has been drawn up for all claims

| Place of search | Date of completion of the search | Examiner |
|---|---|---|
| Munich | 27 May 2025 | Kollreider, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 0229

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2025

| Patent document cited in search report | Publication date | Patent family member(s) | Publication date |
|---|---|---|---|
| WO 2018153915 A1 | 30-08-2018 | DE 102017103540 A1<br>WO 2018153915 A1 | 23-08-2018<br>30-08-2018 |
| US 2018127024 A1 | 10-05-2018 | CN 108016444 A<br>DE 102017125662 A1<br>US 2018127024 A1 | 11-05-2018<br>09-05-2018<br>10-05-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023178952 A